# EUROPEAN PATENT SPECIFICATION

(11) **EP 1 129 805 B1**
(45) Date of publication and mention of the grant of the patent: **19.05.2004**
(21) Application number: 01103395.8
(22) Date of filing: 14.02.2001
(51) Int. Cl.: B23B 27/16

(54) **Cutting insert and tool**
Schneideinsatz und Werkzeug
Plaquette de coupe et outil

(30) Priority: 02.03.2000 SE 0000689
(43) Date of publication of application: 05.09.2001
(73) Proprietor: SANDVIK AKTIEBOLAG, 811 81 Sandviken (SE)
(72) Inventor: Hansson, Per, 805 96 Gävle (SE); Andersson, Claes, 818 92 Valbo (SE)

(56) References cited:
- GB-A- 2 021 992
- "NOVEX Drehwerkzeuge" , WALTER AG , 06/92 XP002169082 see tool PSSN * page 52 *
- "Anwenderkatalog CoroKey" 1997 , SANDVIK COROMANT XP002169083 * page 15 *

## Description

The present invention relates to a tool for chip removing machining, whereby the tool comprises a holder as well as a cutting insert fixed in the holder, which cutting insert has at least a first cutting head having a first major cutting edge. The invention also relates separately to the cutting insert included in the tool.

### Prior Art

A machining tool, which has a cutting insert that, in turn, according to one embodiment, has a cutting head, which is angled in relation to the shaft, is previously known from WO 95/29781. A characteristic feature of this cutting insert is that the minor cutting edges of the cutting head are not parallel to each other. Thus, making it possible for the cutting insert to be fed in two different directions, which are parallel to the respective minor cutting edge. It should also be observed in this context that the major cutting edge is perpendicular to the longitudinal direction of the shaft.

A cutting insert is previously known from EP 0 385 280, which has a cutting head as well as a shaft, whereby the cutting head is hook-shaped in respect of the shaft. According to a preferred embodiment, the cutting head has an extension, which is at a right angle to the extension of the shaft. Also an alternative embodiment shown in the above-mentioned WO 95/29781 has a design which in principal is corresponding.

### Aims and Features of the Invention

A primary aim of the present invention is to describe a tool and a cutting insert of the kind defined in the introduction, whereby a small number of different holders and cutting inserts, respectively, entail a large number of possible combination as regards cutting operations which may be made with the tool according to the present invention.

Another aim of the tool and the cutting insert, respectively, according to the present invention is to improve accessibility in different cutting operations in comparison with known tools and known cutting inserts, respectively, having the corresponding outer dimensions.

At least the primary aim of the present invention is realised by means of a tool and a cutting insert having the features given in the subsequent independent claims. Preferred embodiments of the invention are defined in the dependent claims.

### Short Description of the Drawings

Below different embodiments of the tool and the cutting insert, respectively, according to the present invention will be described, reference being made to the accompanying drawings, where
- Figs 1-5: show in planar view a number of different embodiments of cutting inserts according to the present invention;
- Fig 6: shows a planar view of a part of a tool according to the present invention;
- Fig 7: shows a side view of the tool according to Fig 6;
- Fig 8: shows a perspective view of the tool according to Fig 6;
- Fig 9: shows a planar view of the tool according to Fig 6, whereby the clamp for reasons of clarity has been removed;
- Fig 10: shows a planar view of the tool according to Fig 6, whereby the clamp for reasons of clarity has been removed and another cutting insert than in fig 5 is shown;
- Fig 11: shows a perspective view of the tool according to Fig 10;
- Fig 12: shows a feasible type of machining by means of a cutting insert according to the present invention;
- Fig 13: shows a planar view of an additional cutting insert according to the present invention; and
- Fig 14: shows an assortment of cutting inserts, both according to the present invention and prior art, and holders, whereby different types of machining which the cutting insert may carry out are also indicated.

### Detailed Description of Preferred Embodiments of the Invention

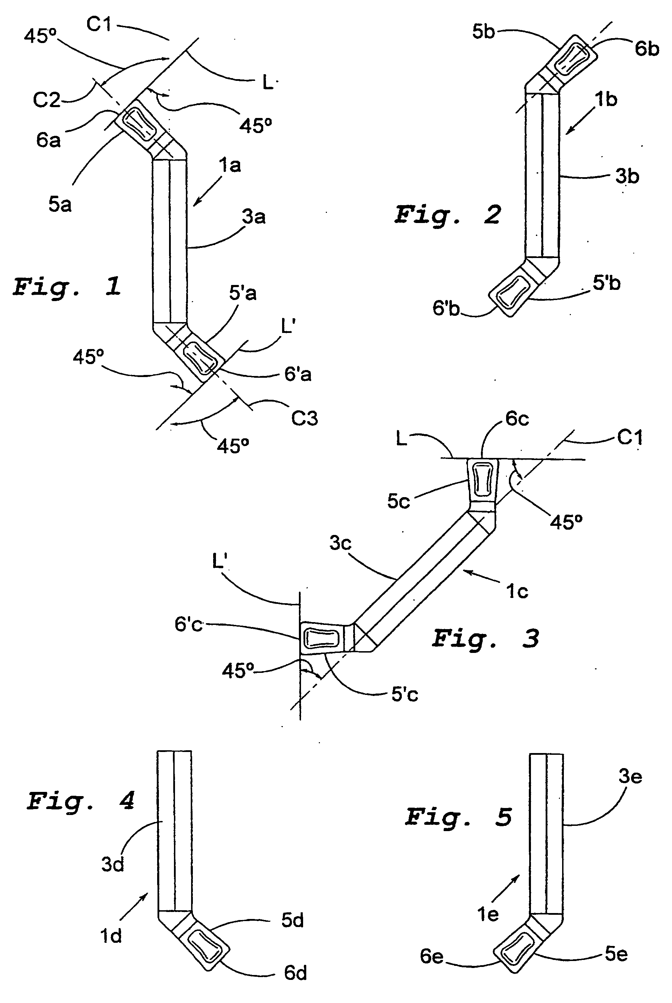

In figs 1-5, a number of cutting inserts 1a, 1b, 1c, 1d, 1e are shown, which constitute cutting inserts according to the present invention where each one of the cutting inserts 1a-1e comprise a shaft 3a, 3b, 3c, 3d, 3e as well as at least a first cutting head 5a, 5b, 5c, 5d, 5e, which has a first major cutting edge 6a, 6b, 6c, 6d, 6e. What generally distinguishes a cutting insert 1a-1e according to the present invention is that, seen in a planar view of the cutting insert, a line L through the first major cutting edge 6a-6e of the first cutting head 5a-5e forms an angle of 45° with a first longitudinal centre line C1 of the shaft 3a-3e. For the type of cutting insert 1a, 1b, 1c, 1d, 1e shown in figs 1-5, this may alternatively be expressed as a second longitudinal centre line C2 of the cutting head 5a, 5b, 5c, 5d, 5e forming an angle of 45° with a first longitudinal centre line C1 of the shaft 3a-3e.

The cutting inserts 1a, 1b, 1c are provided with a second angled cutting head 5'a, 5'b, 5'c at the opposite end of the shaft 3a, 3b, 3c. Also these second cutting heads 5'a, 5'b, 5'c have a second major cutting edge 6'a, 6'b, 6'c. The cutting inserts 1a and 1b illustrated in figs 1 and 2 are mirror-inverted in relation to each other, whereby the cutting heads 5a, 5'a; 5b, 5'b arranged at the respective end of the shaft 3a; 3b at each one of the cutting inserts 1a; 1b are angled towards opposite directions relatively the appurtenant shaft 3a; 3b. The cutting insert 1c illustrated in fig 3 has also two cutting heads 5c and 5'c, whereby said cutting heads 5c, 5'c are angled in the same direction in relation to the appurtenant shaft 3c. In the corresponding way as for the first cutting heads 5a-5e, at the second cutting heads 5'a, 5'b, 5'c a line L' through the second major cutting edges 6'a, 6'b, 6'c forms an angle of 45° with the first longitudinal centre line C 1 of the shaft 3a, 3b, 3c. Alternatively, this may be expressed as a third longitudinal centre line C3 of the cutting head 5'a, 5'b, 5'c forming an angle of 45° with a first longitudinal centre line C1 of the shaft 3a-3e.

In the planar views according to Figs 1-5, the major cutting edges 6a, 6'a, 6b, 6'b, 6c, 6'c, 6d, 6e are parallel to the plane of the paper.

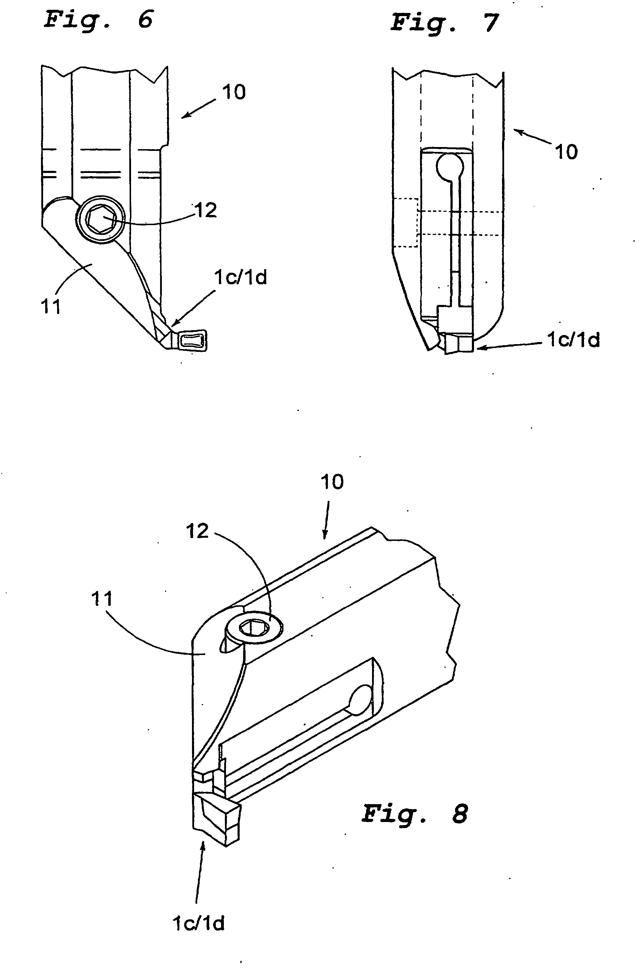

The tool according to Figs 6-8 comprises a holder 10, in which an insert seat for receiving a cutting insert 1c or 1d according to the present invention is arranged. A clamp 11 is attached on top of the cutting insert 1c/1d, whereby said clamp 10 is fixed in the holder by means of a screw 12. By tightening the screw 12, the clamp 10 will fix the cutting insert 1c/1d in the appurtenant insert seat in the holder 10.

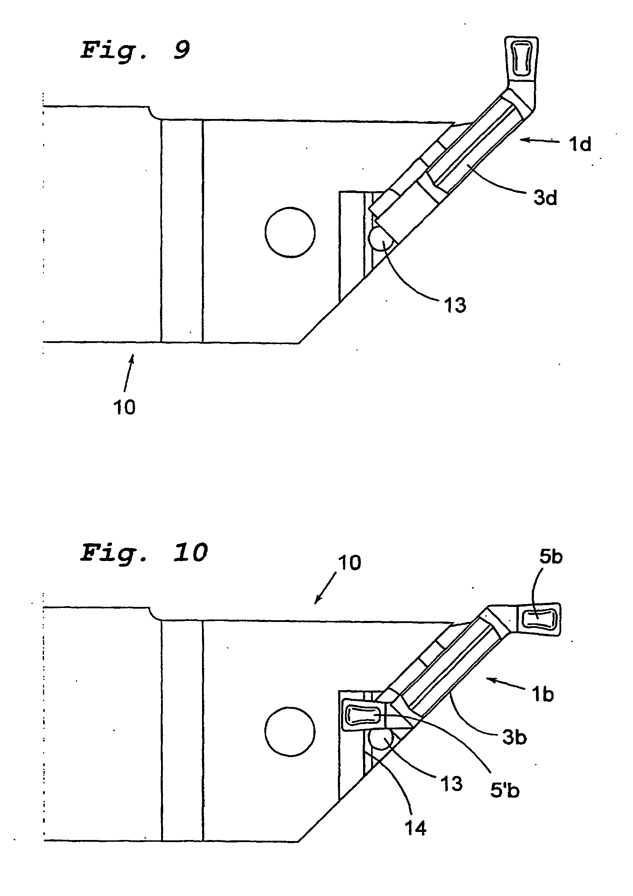

In fig 9, for reasons of clarity, the holder 10 is shown without clamp 11. In that connection, it is seen that the insert seat of the holder 10 has an end stop in the form of a pin 13. As is seen in Fig 9, the end of the shaft 3d turned from the cutting head abuts against said pin 13. The design of the end stop as a pin 13 entails the advantage that said end stop also may be used for cutting inserts which have cutting heads at both ends of the shaft.

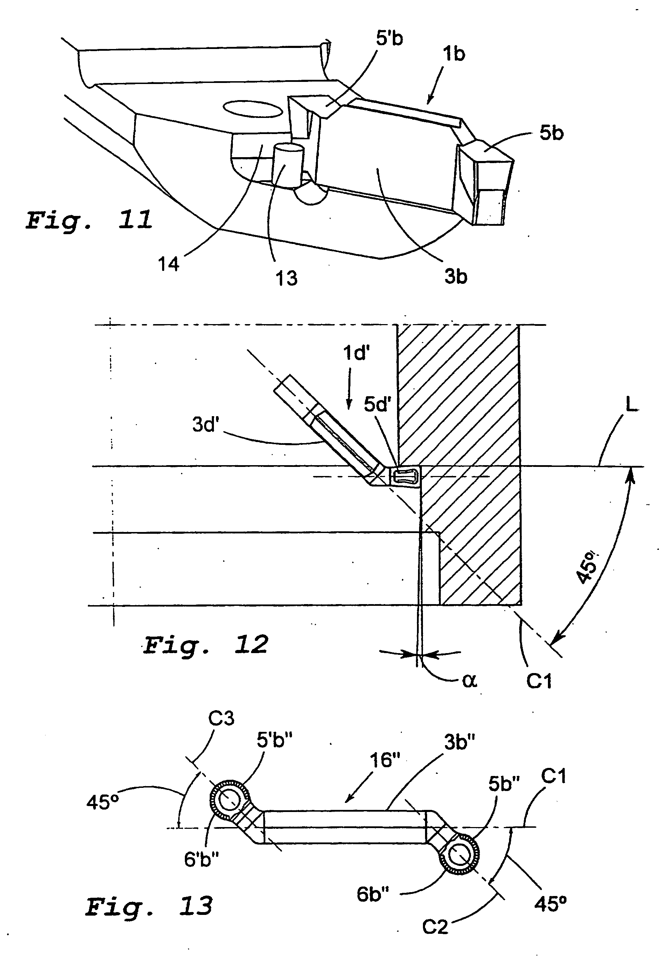

In fig 10 and 11, where the clamp, for reasons of clarity, is omitted, it is shown how a cutting insert I b having cutting heads 5b and 5'b at both ends of the shaft 3b may be attached in the holder 10. As is most clearly seen in Fig 10, the insert seat in the holder 10 is formed with a recess 14 which gives room for the cutting head 5'b which is not in an active position. Also in this case, the pin 13 works as an end stop for the cutting insert 1b, whereby the pin 13 co-operates with one of the side surfaces of the non-active cutting head 5'b of the cutting insert 1b. Thanks to the shaft 3b being fixed laterally in the insert seat of the holder 10, abutment of said side surface against the pin 13 will entail that the cutting insert 1b is secured against displacement in the longitudinal direction of the shaft 3b towards the non-active cutting head 5'b, i.e. co-operation between the side surface of the non-active cutting head 5'b and the pin 13 constitutes an end stop for the cutting insert 1b. Said end stop works in the corresponding way also when the cutting heads 5b and 5'b change place with each other.

The use of a cutting insert 1d' according to the present invention may be used at internal turning is shown in fig 12. Said cutting insert 1d' constitutes a variant of the cutting insert 1d according to Fig 4, whereby one of the side edges of the cutting head 5d' of the cutting insert 1d' constitutes a major cutting edge 15, which carries out machining of the work piece. The edge 6d' corresponding to the major cutting edge 6d of the cutting insert 1d defines, in that connection, the clearance angles α marked in fig 12. As is seen in Fig 12, also in this embodiment, a line L through the major cutting edge 15 forms, an angle of 45° with a longitudinal centre line C1 of the shaft 3d'.

The cutting insert 1b" according to the present invention illustrated in fig 13 differs principally from the cutting insert 1b according to Fig 2 in that the cutting insert 1b" in planar view has rounded cutting heads 5b" and 5'b", i.e. cutting heads having a continuously curved cutting edge 6b", 6'b", more precisely a cutting edge which has a circular shape in planar view. As for the angling of the cutting heads 5b", 5'b" in relation to the shaft 3b", it may be expressed as a second and a third longitudinal centre line C2 and C3, respectively, of the cutting heads 5b" and 5'b" forming an angle of 45° with a first longitudinal centre line C1 of the shaft 3b".

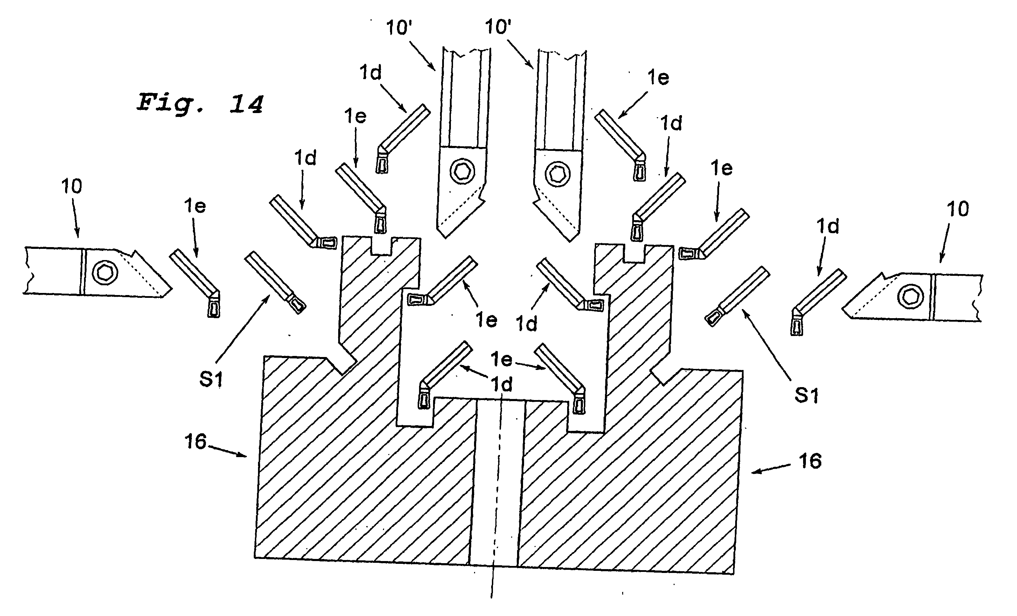

In fig 14, a specification of a number of cutting inserts and a number of holders is shown, whereby the majority of cutting inserts 1d and 1e constitute cutting inserts according to the present invention while a few of the cutting inserts S1 and S2 illustrated in fig 14 represent prior art. The holders 10 and 10' are of different types, whereby the holder 10 is intended for external tools while the holder 10', which for instance consists of a bar, is intended for internal tools. The cutting inserts 1d, 1e, S 1 and S2 may arbitrarily be combined with any one of the holders 10, 10'.

In fig 14, a workpiece 16 is also shown, in which different types of machining operations are marked, the majority of which advantageously may be made by means of a tool according to the present invention.

### Feasible Modifications of the Invention

As for the detailed design of the cutting insert according to the present invention, these may naturally be varied within the scope of the invention. As is seen in the embodiments accounted for above, the cutting heads may thus have different design as regards the position of the major cutting edges but also as regards surfaces for chip breaking and clearance. Also the design of the shaft may be varied, for instance depending on the design of the insert seat and the clamping members of the holder.

## Claims

1. Tool for chip removing machining, whereby the tool comprises a holder (10) as well as a cutting insert (1a-1e; 1d'; 1b") fixed in the holder (10; 10'), which cutting insert comprises a shaft (3a-3e; 3d'; 3b") having a first longitudinal centre line (C1) as well as at least a first cutting head (5a-5e; 5d'; 5b") having a first major cutting edge (6a-6e; 15; 6b"), **characterized in that**, seen in planar view of the cutting insert (1a-1e; 1b"), a second longitudinal centre line (C2) of the first cutting head (5a-5e; 5b") forms an angle of 45° with the first longitudinal centre line (C1) of the shaft (3a-3e; 3b").

2. Tool according to claim 1, **characterized in that**, seen in planar view of the cutting insert (1a-1e; 1d'), a line (L) through the first major cutting edge (6a-6e; 15) of the first cutting head (5a-5e; 5d') forms an angle of 45° with the first longitudinal centre line (C1) of the shaft (3a-3e; 3d') of the cutting insert (1a-1e; 1d').

3. Tool according to claim 1 or 2, **characterized in that** the holder (10; 10') has an insert seat, adjacent to which an end stop (13) for the cutting insert (1a-1e; 1d'; 1b") is arranged.

4. Tool according to claim 3, **characterized in that** the end stop consists of a pin (13).

5. Tool according to claim 3 or 4, **characterized in that** adjacent to the end stop (13), the insert seat is formed with a recess, in which a second cutting head (5'a, 5'b, 5'c; 5'b") of the cutting insert (1a, 1b, 1c; 1b") is received.

6. Cutting insert (1a-1e; 1d'; 1b") for chip removing machining, whereby the cutting insert (1a-1e; 1d'; 1b") comprises a shaft (3a-3e; 3d'; 3b") having a first longitudinal centre line (C1) as well as at least a first cutting head (5a-5e; 5d'; 5b") having a first major cutting edge (6a-6e; 15; 6b"), **characterized in that**, seen in planar view of the cutting insert (1a-1e; 1b"), a second longitudinal centre line (C2) of the first cutting head (5a-5e; 5b") forms an angle of 45° to the first longitudinal centre line (C1) of the shaft (3a-3e; 3b").

7. Cutting insert (1a-1c; 1b") according to claim 6, **characterized in that**, seen in planar view of the cutting insert (1a-1e; 1d'), a line (L) through the first major cutting edge (6a-6e; 15) of the first cutting head (5a-5e; 5d') forms an angle of 45° to the first longitudinal centre line (C1) of the shaft (3a-3e; 3d').

8. Cutting insert (1a-1c; 1b") according to claim 6 or 7, **characterized in that** the cutting insert (1a-1c; 1b") has a second cutting head (5'a, 5'b, 5'c; 5'b"), which is positioned at the opposite end of the shaft (3a, 3b, 3c; 3b").

9. Cutting insert (1a, 1b, 1c; 1b") according to claim 8, **characterized in that** a third longitudinal centre line (C3) of the second cutting head (5'a, 5'b, 5'c; 5b") forms an angle of 45° to the first longitudinal centre line (C1) of the shaft (3'a, 3'b, 3'c; 3b").

## Patentansprüche

1. Werkzeug zur spanabhebenden Bearbeitung, wobei das Werkzeug einen Halter (10) sowie einen Schneideinsatz (1 a-1 e; 1 d'; 1 b"), der in dem Halter (10; 10') fixiert ist, aufweist, wobei der Schneideinsatz einen Schaft (3a-3e; 3d'; 3b") besitzt, der eine erste Längsmittellinie (C1) sowie wenigstens einen ersten Schneidkopf (5a-5e; 5d'; 5b") mit einer ersten Hauptschneidkante (6a-6e, 15; 6b") hat, **dadurch gekennzeichnet, daß** in planarer Ansicht des Schneideinsatzes (1a-1e; 1b") eine zweite Längsmittellinie (C2) des ersten Schneidkopfes (5a-5e; 5b") einen Winkel von 45° mit der ersten Längsmittellinie (C1) des Schaftes (3a-3e; 3b") bildet.

2. Werkzeug nach Anspruch 1, **dadurch gekennzeichnet, daß** in planarer Darstellung des Schneideinsatzes (1a-1e; 1d') gesehen eine Linie (L) durch die erste Hauptschneidkante (6a-6e; 15) des ersten Schneidkopfes (5a-5e; 5d') einen Winkel von 45° mit der ersten Längsmittellinie (C1) des Schaftes (3a-3e; 3d') des Schneideinsatzes (1a-1e; 1d') bildet.

3. Werkzeug nach Anspruch 1 oder 2, **dadurch gekennzeichnet, daß** der Halter (10; 10') einen Einsatzsitz hat, in Nachbarschaft zu dem ein Endanschlag (13) für den Schneideinsatz (1 a-1 e; 1d'; 1 b") angeordnet ist.

4. Werkzeug nach Anspruch 3, **dadurch gekennzeichnet, daß** der Endanschlag aus einem Stift (13) besteht.

5. Werkzeug nach Anspruch 3 oder 4, **dadurch gekennzeichnet, daß** in Nachbarschaft zu dem Endanschlag (13) der Einsatzsitz mit einer Vertiefung ausgebildet ist, in welcher ein zweiter Schneidkopf (5'a, 5'b, 5'c; 5'b") des Schneideinsatzes (1a, 1b, 1c; 1b") aufgenommen ist.

6. Schneideinsatz (1a-1e; 1d'; 1b") zur spanabhebenden Bearbeitung, wobei der Schneideinsatz (1a-1e; 1d'; 1b") einen Schaft (3a-3e; 3d'; 3b") mit einer ersten Längsmittellinie (C1) sowie wenigstens einen ersten Schneidkopf (5a-5e; 5d'; 5b") mit einer ersten Hauptschneidkante (6a-6e; 15; 6b") umfaßt, **dadurch gekennzeichnet, daß** in planarer Darstellung des Schneideinsatzes (1a-1e; 1b") gesehen eine zweite Längsmittellinie (C2) des ersten Schneidkopfes (5a-5e; 5b") einen Winkel von 45° zu der ersten Längsmittellinie (C1) des Schaftes (3a-3e; 3b") bildet.

7. Schneideinsatz (1a-1c; 1b") nach Anspruch 6, **dadurch gekennzeichnet, daß** in planarer Darstellung des Schneideinsatzes (1a-1e; 1d') gesehen eine Linie (L) durch die erste Hauptschneidkante (6a-6e; 15) des ersten Schneidkopfes (5a-5e; 5d') einen Winkel von 45° zu der ersten Längsmittellinie (C1) des Schaftes (3a-3e; 3d') bildet.

8. Schneideinsatz (1a-1c, 1b") nach Anspruch 6 oder 7, **dadurch gekennzeichnet, daß** der Schneideinsatz (1a-1c; 1b") einen zweiten Schneidkopf (5'a, 5'b, 5'c; 5'b") hat, welcher am entgegengesetzten Ende des Schaftes (3, 3b, 3c; 3b") angeordnet ist.

9. Schneideinsatz (1a, 1b, 1c; 1b") nach Anspruch 8, **dadurch gekennzeichnet, daß** eine dritte Längsmittellinie (C3) des zweiten Schneidkopfes (5'a, 5'b, 5'c; 5b") einen Winkel von 45° zu der ersten Längsmittellinie (C1) des Schaftes (3'a, 3'b, 3'c; 3b") bildet.

## Revendications

1. Outil d'usinage par enlèvement de copeaux, dans lequel l'outil comprend un support (10) ainsi qu'une plaquette de coupe (1a à 1e; 1d'; 1b") fixée dans le support (10; 10'), la plaquette de coupe comprenant un fût (3a à 3 e; 3d'; 3b") ayant une première ligne centrale longitudinale (C1) ainsi qu'au moins une première tête de coupe (5a à 5e; 5d'; 5b") ayant une première arête de coupe principale (6a à 6e; 15; 6b"), **caractérisé par le fait que**, en vue en plan de la plaquette de coupe (1a à 1e; 1b"), une deuxième ligne centrale longitudinale (C2) de la première tête de coupe (5a à 5e; 5b") forme un angle de 45 degrés par rapport à la première ligne centrale longitudinale (C1) du fût (3a à 3e; 3b").

2. Outil selon la revendication 1, **caractérisé par le fait que**, en vue en plan de la plaquette de coupe (1a à 1e; 1d'), une ligne (L) à travers la première arête de coupe principale (6a à 6e; 15) de la première tête de coupe (5a à 5e; 5d') forme un angle de 45 degrés par rapport à la première ligne centrale longitudinale (C1) du fût (3a à 3e; 3d') de la plaquette de coupe (1a à le; 1d').

3. Outil selon l'une des revendications 1 et 2, **caractérisé par le fait que** le support (10, 10') comporte un siège de plaquette, à proximité duquel est disposée une butée d'extrémité (13) pour la plaquette de coupe (1a à 1e; 1d'; 1b").

4. Outil selon la revendication 3, **caractérisé par le fait que** la butée d'extrémité consiste en une broche (13).

5. Outil selon l'une des revendications 3 et 4, **caractérisé par le fait que**, de façon adjacente à la butée d'extrémité (13), la siège de plaquette comporte une cavité dans laquelle est reçue une seconde tête de coupe (5'a, 5'b, 5'c; 5'b") de la plaquette de coupe (1a, 1b, 1c; 1b").

6. Plaquette de coupe (1a à 1e; 1d'; 1b") pour usinage par enlèvement de copeaux, dans laquelle la plaquette de coupe (1a à 1e; 1d'; 1b") comprend un fût (3a à 3e; 3d'; 3b") ayant une première ligne centrale longitudinale (C1) ainsi qu'au moins une première tête de coupe (5a à 5e; 5d'; 5b") ayant une première arête de coupe (6a à 6e; 15; 6b"), **caractérisée par le fait que**, en vue en plan de la plaquette de coupe (1a à 1e; 1b"), une deuxième ligne centrale longitudinale (C2) de la première tête de coupe (5a à 5e; 5b") forme un angle de 45 degrés par rapport à la première ligne centrale (C1) du fût (3a à 3e; 3b").

7. Plaquette de coupe (1a à 1c; 1b") selon la revendication 6, **caractérisée par le fait que**, en vue en plan de la plaquette de coupe (1a à 1e; 1d'), une ligne (L) à travers la première arête de coupe principale (6a à 6e; 15) de la première tête de coupe (5a à 5e; 5d') forme un angle de 45 degrés par rapport à la première ligne centrale longitudinale (C1) du fût (3a à 3e; 3d').

8. Plaquette de coupe (1a à 1c; 1b") selon l'une des revendications 6 et 7, **caractérisée par le fait que** la plaquette de coupe (1a à 1c; 1b") comporte une seconde tête de coupe (5'a, 5'b, 5'c; 5'b") qui est située à l'extrémité opposée du fût (3a, 3b, 3c; 3b").

9. Plaquette de coupe (1a, 1b, 1c; 1b") selon la revendication 8, **caractérisée par le fait qu'**une troisième ligne centrale longitudinale (C3) de la seconde tête de coupe (5'a, 5'b, 5'c; 5b") forme un angle de 45 degrés par rapport à la première ligne longitudinale (C1) du fût (3'a, 3'b, 3'c; 3b").
